# EUROPÄISCHE PATENTSCHRIFT

(11) **EP 1 420 627 B1**
(45) Veröffentlichungstag und Bekanntmachung des Hinweises auf die Patenterteilung: **01.07.2009**
(21) Anmeldenummer: 02724283.3
(22) Anmeldetag: 10.04.2002
(51) Int. Cl.: A01G 25/06

(54) **TEXTILE BEWÄSSERUNGSMATTE**
TEXTILE IRRIGATION MAT
NATTE D'IRRIGATION TEXTILE

(30) Priorität: 14.04.2001 DE 10118643
(43) Veröffentlichungstag der Anmeldung: 26.05.2004
(73) Patentinhaber: IGG-Internationale Geotextil Gesellschaft mbH, 27239 Twistringen (DE); A. H. Meyer Maschinenfabrik GmbH, 27239 Twistringen (DE)
(72) Erfinder: ARNOLD, Rolf, 01257 Dresden (DE); HUFNAGEL, Evelin, 01796 Pirna (DE); HELBIG, Reinhard, 09353 Oberlungwitz (DE); SCHOLZ, Manfred, 09131 Chemnitz (DE); MÜLLER, Peter, 09430 Drehbach (DE)
(74) Vertreter: Eisenführ, Speiser & Partner
(86) Internationale Anmeldenummer: PCT/EP2002/003966
(87) Internationale Veröffentlichungsnummer: WO 2002/082888

(56) Entgegenhaltungen:
- WO-A-00/65901
- DE-A- 2 908 615
- DE-A- 4 037 396
- US-A- 3 361 259
- US-A- 5 839 659
- US-A- 5 938 372

## Beschreibung

Die Erfindung betrifft eine textile Bewässerungsmatte nach dem Oberbegriff des Anspruchs 1 zur flächigen Verteilung von Wasser, insbesondere im unterirdischen Bereich. Anwendungsgebiete sind der Garten- und Landschaftsbau.

In Gebieten mit hoher Sonneneinstrahlung und geringen Niederschlägen ist eine künstliche Bewässerung zwingend erforderlich. Zu diesem Zweck werden verschiedene Varianten von Bewässerungsschläuchen über viele Kilometer in weit verzweigten Systemen verlegt. Insbesondere in Parkanlagen ergibt sich hierdurch eine Beeinträchtigung der Optik. Häufig werden Tropfschläuche eingesetzt, die eine lokal differenzierte Ausbringung des Wassers ermöglichen, wodurch im Vergleich zum Einsatz von Sprenganlagen die Wasserverluste durch Verdunstung reduziert werden.

Aus dem Bereich des Gartenbaus sind verschiedene Bewässerungsvorrichtungen bekannt, die speziell für den Einsatz im Gewächshausbereich ausgelegt sind, eine sehr genaue Dosierung ermöglichen und hierdurch einen relativ komplizierten Aufbau besitzen. So wird in der DE 20 19 423 eine Bewässerungsvorrichtung für Pflanzen in Töpfen oder anderen Gefäßen beschrieben, die eine spezielle Druckkompensation besitzt, um einen gleichmäßigen Wasseraustritt auch auf unebenen Flächen zu ermöglichen.

In der DE 25 01 543 wird eine Bewässerungseinrichtung für Pflanzenzuchtbetriebe vorgeschlagen, bei der haarfeine flexible Verteilerschläuche bündelartig angeschlossen sind und die einzelnen Pflanzen mit Wasser versorgen. Eine flächige Bewässerung ist mit diesem System nicht möglich.

Eine Vorrichtung für die Nährfilmtechnik im Pflanzenbau wird in der DD 203 215 beschrieben. Die Vorrichtung besteht aus einer flexiblen Rinne, die mit Schaumstofffolie für den Transport der Nährlösung ausgelegt ist. Dieses Prinzip kann ebenfalls nicht für eine großflächige Freilandbewässerung eingesetzt werden.

Auch die in der DE 20 19 423 vorgeschlagenen Decke zur selbständigen Bewässerung von Pflanzen, die Topfpflanzen sehr gleichmäßig mit Wasser versorgen kann, ist für flächige Bewässerungen im Freiland durch ihre relativ komplizierte Konstruktion nicht geeignet.

Die DE 29 08 615 beschreibt eine Vorrichtung zur Wasserkultur-Anzucht von Pflanzen, die aus faserigen Kapillarmaterial besteht, das in Längsrichtung in die Wand einer Flüssigkeitszuführungsröhre eingesetzt ist. Die Herstellung dieser Vorrichtung erfordert einen hohen konstruktiven Aufwand.

Weiterhin ist aus der DE 197 49 673 ein unterirdisches Bewässerungssystem für Friedhofsanlagen bekannt, welches einen Behälter mit einer Schicht Granulat als Füllmaterial und einer Schicht Erde beinhaltet, der mit Wasser aufgefüllt wird. Für die Erhöhung der Wasserspeicherung ist das Füllmaterial in eine Vliesummantelung aus Kunststofffasern eingebettet. Zusätzlich sind unter dem Füllmaterial eine Vliesschicht bzw. auf dem Füllmaterial ein Vliesgewebe gelegt. Dieses System ist wegen der sehr aufwendigen Konstruktion nur für kleine Bewässerungsflächen, wie beispielsweise Grabstellen, einsetzbar.

Ein unterirdisches Versorgungssystem zur großflächigen Bewässerung von Pflanzenkulturen ist aus der DE 199 33 554 bekannt, bei dem in der zu bewässernden Agrarfläche elastische Schläuche, die mit ventilartig wirkenden Austrittsöffnungen versehen sind, unter der Erde verlegt und an ein Wasserleitungssystem angeschlossen sind. Damit werden die oberhalb und unterhalb der Schläuche angrenzenden Erdzonen ständig mit Wasser in mengenmäßiger Dosierung feucht gehalten. Dazu sind die einzelnen Schläuche in Abständen von etwa 60-70 cm in der Bodentiefe von etwa 30-60 cm angeordnet und beidseitig an Kammrohre angeschlossen, die ebenfalls im Boden verlegt und mit Wasser gespeist werden. Die Anordnung der Bewässerungsschläuche ist bei diesem Versorgungssystem für einen großflächigen Einsatz sehr zeit- und kostenaufwendig.

Ein weiteres Bewässerungssystem ist aus der US 5 839 659 bekannt. Dieses system besteht aus in Textilbahnen eingearbeiteten Leitungen.

Der Erfindung liegt die Aufgabe zugrunde, eine kostengünstige Bewässerungsanlage für einen großflächigen Einsatz, vorzugsweise unterirdisch im Grünflächenbereich bereitzustellen, die eine einfachere und schnellere Verlegung ohne zusätzliche Rohrsysteme gewährleistet und zugleich die Möglichkeit der Anpassung an örtlich unterschiedliche Untergrundverhältnisse erreicht werden kann.

Gelöst wird die Aufgabe durch die im Anspruch 1 aufgezeigten Merkmale. Vorteilhafte Ausgestaltungen sind in den Unteransprüchen enthalten.

Die erfindungsgemäße textile Bewässerungsmatte ermöglicht den Aufbau eines unterirdischen Versorgungssystems zur großflächigen Bewässerung von Pflanzenkulturen, das kostengüstig hergestellt, universell auf allen Böden eine kontinuierliche Bewässerung über längere Zeiträume und zu allen Tageszeiten kostengünstig betrieben werden kann und gleichzeitig eine optimale Pflanzenversorgung gewährleistet. Die Verlegung der Bewässerungsmatte kann abhängig vom Einsatz der Schläuche in bestimmter Stärke, Länge und der entsprechenden Anzahl Wasseraustrittsöffnungen in den Schläuchen bestimmt werden. Im Gegensatz zu oberirdischen Bewässerungssystemen kann so gut wie kein Wasser in die Atmosphäre verdunsten und andererseits wird unnötiger Wasserverlust durch Versickern vermieden.

Ein weiterer wesentlicher Vorteil der erfindungsgemäßen Bewässerungsmatte ist in ihrer großflächigen und dabei leichten Konstruktion in niedriger Höhe zu sehen. Die konstruktiven Abmessungen ermöglichen eine Vorfertigung der Bewässerungsmatte auch in großflächigen Abmessungen und den problemlosen Transport zum Einsatzort. Des weiteren ist eine schnelle und risikolose Verlegung mit geringem personellen und maschinellen Aufwand durch minimalen Erdaushub am Einsatzort infolge des niedrigen Gewichtes auch bei großen Abmessungen gewährleistet. Durch eine ausreichende Flexibilität der Matte ist die problemlose Anpassung an das Gelände möglich.

Die Erfindung wird in der nachfolgenden Beschreibung an Hand eines Ausführungsbeispiels näher erläutert. In den dazugehörigen Zeichnungen zeigen
- Fig. 1: einen Ausschnitt einer nichterfindungsgemäßen Bewässerungsmatte in perspektivischer Darstellung,
- Fig. 2: die erfindungsgemäße Bewässerungsmatte mit Rundschläuchen und zusätzlichen Füllstreifen,
- Fig. 3: den Querschnitt einer nicht erfindungsgemäßen Bewässerungsmatte mit eingearbeiteten Flachschläuchen.

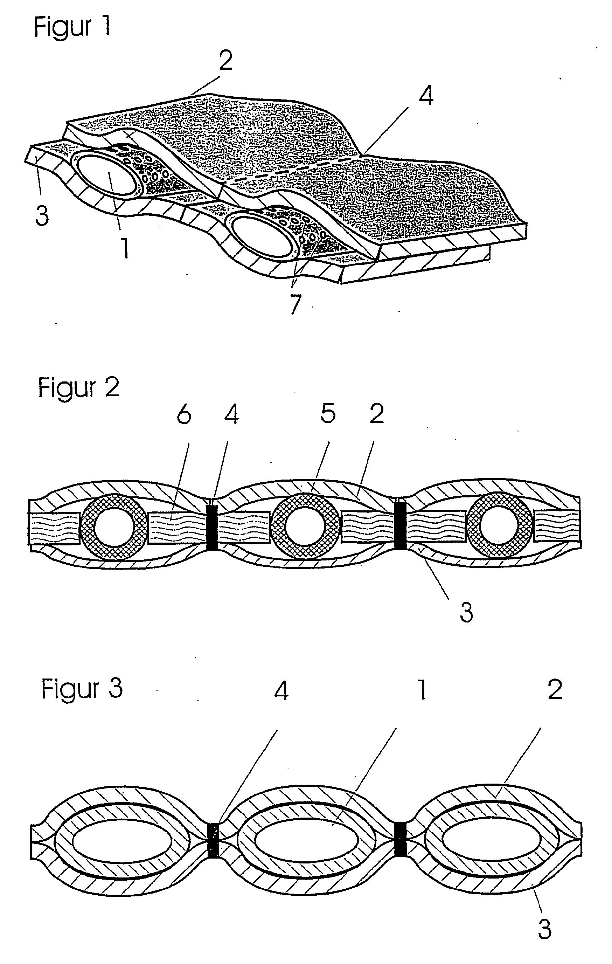

In der Fig. 1 dargestellt ist eine textile Bewässerungsmatte, bei der zwischen den zwei wasserleitfähigen Textilbahnen, vorzugsweise Vliesstoffbahnen 2, 3 im Abstand Bewässerungsschläuche 1 mit Wasseraustrittsöffnungen 7 eingebettet sind, wobei die als Unterbahn fungierende Vliesstoffbahn 3 eine wasserundurchlässige Außenseite besitzt. Es werden Vliesstoffbahnen 2, 3 aus vorzugsweise synthetischem oder anderen schwer verrottbarem Fasermaterial mit hohem Wasserspeichervermögen eingesetzt. Die Vliesstoffbahnen 2, 3 können dabei gleiche oder unterschiedliche Faser- und/oder Querschnittsstrukturen aufweisen. Für die Bewässerungsschläuche 1 können Rund- oder Flachschläuche (Fig. 3) verwendet werden. Die Vliesstoffbahnen 2, 3 sind in den Bereichen zwischen den Bewässerungsschläuchen 1 durch nahtartige Verbindungen 4 nach dem Nähwirkverfahren, durch Vernadeln, Kleben oder anderen Verbindungsverfahren so verbunden, daß die Bewässerungsschläuche 1 straff umhüllt sind und ein Verrutschen der Bewässerungsschläuche 1 vermieden wird. Durch die hierdurch entstehenden Druckverluste können Bewässerungsschläuche 1 mit relativ großen Wasseraustrittsöffnungen 7 eingesetzt werden, so daß die Verstopfungsgefahr der Schläuche 1 reduziert werden kann. Besonders günstig ist der Einsatz von linienförmigen Bewässerungselementen 5, wie in der DE 40 37 396 beschrieben, da hierdurch eine besonders gute Wasserverteilung und -speicherung erzielt werden kann.

Beim Einsatz großer Mattenflächen bzw. Schlauchlängen ist es vorteilhaft, druckkompensierte Bewässerungsschläuche 1 zu verwenden. Bei der Verarbeitung von Rundschläuchen mit größerem Durchmesser werden für die Herstellung einer ebenen Oberfläche der Matte erfindungsgemäß zusätzliche Füllstreifen 6 zwischen die Bewässerungsschläuche 1 angeordnet werden, die mit den Vliesstoffbahnen 2, 3 verbunden sind (Fig. 2). Die Füllstreifen 6 können aus Vliesstoffstreifen mit der gleichen Struktur wie die Vliesstoffbahnen 2 und/oder 3 eingesetzt werden. Als Füllstreifen 6 lassen sich auch unterschiedliche Vliesstoffstreifen, Filzstreifen, textile Fäden oder anderes strangartiges Textilmaterial verwenden.

Die in den Vliesstoffbahnen 2 und 3 eingebetteten Bewässerungsschläuche 1 können in Längs- und/oder Querrichtung angeordnet werden, wobei auch eine definierte flächenartige Anordnung möglich ist. Es können Bewässerungsschläuche 1 mit unterschiedlichen Durchmesser eingesetzt werden. Ebenso können die Wasseraustrittsöffnungen 7 unterschiedliche Durchmesser bzw. Querschnitte aufweisen. Anzahl und Abstand der Wasseraustrittsöffnungen 7 sind definierbar. Die Anordnung der Wasseraustrittsöffnungen 7 erfolgt vorzugsweise an der unteren Seite der Bewässerungsschläuche 1. Abhängig vom vorhandenen Erdreich und der zu bewässernden Pflanzen ist auch eine gleichmäßige Verteilung der Wasseraustrittsöffnungen 7 am Umfang der Bewässerungsschläuche 1 möglich. Für die Wasserversorgung lassen sich die Schlauchenden direkt an das Wasserleitungsystem oder andere Wasserversorgungssysteme ohne eine aufwendige Verlegung unterirdischer Rohrleitungssysteme anschließen.

## Patentansprüche

1. Textile Bewässerungsmatte zur flächigen Verteilung von Wasser, vorzugsweise im unterirdischen Bereich, bestehend aus wasserleitfähigen Textilbahnen mit eingearbeiteten Schläuchen, wobei zwischen zwei Vliesstoffbahnen (2, 3) perforierte Bewässerungsschläuche (1) im Abstand zueinander angeordnet sind und die Vliesstoffbahnen (2, 3) zwischen den Bewässerungsschläuchen (1) so miteinander verbunden sind, dass die Bewässerungsschläuche (1) straff umhüllt sind,
**dadurch gekennzeichnet, dass** zwischen den Bewässerungsschläuchen (1) zusätzlich textile Füllstreifen (6) angeordnet sind, die mit den Vliesstoffbahnen (2, 3) verbunden sind.

2. Textile Bewässerungsmatte nach Anspruch 1, **gekennzeichnet dadurch, dass** die untere Vliesstoffbahn (3) eine wasserundurchlässige Außenseite besitzt.

3. Textile Bewässerungsmatte nach Anspruch 1 bis 2, **gekennzeichnet dadurch, dass** die Vliesstoffbahnen (2, 3) aus synthetischem oder anderen schwer verrottbarem Fasermaterial mit hohem Wasserspeichervermögen bestehen.

4. Textile Bewässerungsmatte nach Anspruch 1 bis 3, **gekennzeichnet dadurch, dass** die Vliesstoffbahnen (2, 3) gleiche oder unterschiedliche Faser- und/oder Querschnittsstruktur aufweisen.

5. Textile Bewässerungsmatte nach Anspruch 1 bis 4, **gekennzeichnet dadurch, dass** die Vliesstoffbahnen (2, 3) naht artig durch Vernadeln, Nähwirken, Nahen, Kleben, oder dgl. verbunden sind.

6. Textile Bewässerungsmatte nach Anspruch 1 bis 5, **gekennzeichnet dadurch, dass** die Füllstreifen (6) beispielsweise aus Vliesstoffstreifen, Fadenmaterial oder anderen strangförmigen Textilmaterial bestehen.

7. Textile Bewässerungsmatte nach Anspruch 1 bis 6, **gekennzeichnet dadurch, dass** die Bewässerungsschläuche (1) aus Rund- oder Flachschläuchen bestehen, die eine Vielzahl von Wasseraustrittsöffnungen (7) aufweisen, deren Abstand und Durchmesser definierbar sind.

8. Textile Bewässerungsmatte nach Anspruch 1 bis 7, **gekennzeichnet dadurch, dass** die Bewässerungsschläuche (1) in Längs- und/oder Querrichtung eingebunden sind.

9. Textile Bewässerungsmatte nach Anspruch 1 bis 8, **gekennzeichnet dadurch, dass** die Bewässerungsschläuche (1) unterschiedliche Durchmesser aufweisen.

10. Textile Bewässerungsmatte nach den Ansprüchen 1 bis 9, **gekennzeichnet dadurch, dass** die Bewässerungsschläuche (1) linienförmige Bewässerungselemente (5) sind.

## Claims

1. Textile irrigation mat for the planar distribution of water, preferably underground, consisting of water-conducting textile webs with incorporated tubes, wherein perforated irrigation tubes (1) are arranged in spaced-apart relationship between two nonwoven webs (2, 3) and the nonwoven webs (2, 3) are joined to each other between the irrigation tubes (1) in such a manner that the irrigation tubes (1) are tightly enclosed,
**characterised in that** textile filling strips (6) are additionally arranged between the irrigation tubes (1), which textile filling strips (6) are joined to the nonwoven webs (2, 3).

2. Textile irrigation mat according to claim 1, **characterised in that** the lower nonwoven web (3) has a water-impermeable exterior.

3. Textile irrigation mat according to claim 1 or 2, **characterised in that** the nonwoven webs (2, 3) consist of synthetic or other fibre material that is difficult to rot and that has a high water storage capacity.

4. Textile irrigation mat according to claims 1 to 3, **characterised in that** the nonwoven webs (2, 3) have an identical or different fibre and/or cross-sectional structure.

5. Textile irrigation mat according to claims 1 to 4, **characterised in that** the nonwoven webs (2, 3) are joined together in a seam-like manner by needling, stitch-bonding, sewing, adhesive bonding or the like.

6. Textile irrigation mat according to claims 1 to 5, **characterised in that** the filling strips (6) consist, for example, of nonwoven strips, thread material or other strand-shaped textile material.

7. Textile irrigation mat according to claims 1 to 6, **characterised in that** the irrigation tubes (1) consist of round or flat tubes having a plurality of water outlet openings (7) of definable spacing and diameter.

8. Textile irrigation mat according to claims 1 to 7, **characterised in that** the irrigation tubes (1) are integrated in the longitudinal and/or transverse direction.

9. Textile irrigation mat according to claims 1 to 8, **characterised in that** the irrigation tubes (1) have different diameters.

10. Textile irrigation mat according to claims 1 to 9, **characterised in that** the irrigation tubes (1) are linear irrigation elements (5).

## Revendications

1. Natte d'irrigation textile destinée à répartir l'eau en nappe, de préférence dans la zone souterraine, constituée de bandes textiles aptes à conduire l'eau dans lesquelles sont incorporés des tuyaux, des tuyaux d'irrigation perforés (1) étant disposés à distance les uns des autres entre deux bandes de tissu non-tissé (2, 3) et les bandes de tissu non-tissé (2, 3) entre les tuyaux d'irrigation (1) étant reliées l'une à l'autre, de sorte que les tuyaux d'irrigation (1) sont enveloppés de façon rigide,
**caractérisée en ce que** des rubans de remplissage textiles (6), qui sont reliés aux bandes de tissu non-tissé (2, 3), sont disposés en plus entre les tuyaux d'irrigation (1).

2. Natte d'irrigation textile selon la revendication 1, **caractérisée en ce que** la bande de tissu non-tissé inférieure (3) possède une face extérieure étanche à l'eau.

3. Natte d'irrigation textile selon l'une quelconque des revendications 1 à 2, **caractérisée en ce que** les bandes de tissu non-tissé (2, 3) sont constituées d'un matériau fibreux synthétique ou d'un autre matériau fibreux difficilement putrescible et doté d'une forte capacité de rétention hydrique.

4. Natte d'irrigation textile selon l'une quelconque des revendications 1 à 3, **caractérisée en ce que** les bandes de tissu non-tissé (2, 3) comprennent une structure de fibre et/ou de section identique ou différente.

5. Natte d'irrigation textile selon l'une quelconque des revendications 1 à 4, **caractérisée en ce que** les bandes de tissu non-tissé (2, 3) sont reliées à la façon d'une soudure par aiguilletage, tricot Malimo, couture, collage, ou similaire.

6. Natte d'irrigation textile selon l'une quelconque des revendications 1 à 5, **caractérisée en ce que** les rubans de remplissage (6) sont constitués par exemple de rubans de tissu non-tissé, d'un matériau à fil textile ou d'un autre matériau textile en forme d'écheveau.

7. Natte d'irrigation textile selon l'une quelconque des revendications 1 à 6, **caractérisée en ce que** les tuyaux d'irrigation (1) sont constitués de tuyaux ronds ou plats, qui comprennent une pluralité d'ouvertures d'évacuation d'eau (7) dont l'intervalle et le diamètre peuvent être définis.

8. Natte d'irrigation textile selon l'une quelconque des revendications 1 à 7, **caractérisée en ce que** les tuyaux d'irrigation (1) sont incorporés dans la direction longitudinale et/ou transversale.

9. Natte d'irrigation textile selon l'une quelconque des revendications 1 à 8, **caractérisée en ce que** les tuyaux d'irrigation (1) présentent des diamètres différents.

10. Natte d'irrigation textile selon l'une quelconque des revendications 1 à 9, **caractérisée en ce que** les tuyaux d'irrigation (1) sont des éléments d'irrigation linéaires (5).
